(19) Europäisches Patentamt
European Patent Office
Office européen des brevets

(11) **EP 3 039 792 B1**

(12) **FASCICULE DE BREVET EUROPEEN**

(45) Date de publication et mention
de la délivrance du brevet:
**23.08.2017 Bulletin 2017/34**

(21) Numéro de dépôt: **14784426.0**

(22) Date de dépôt: **10.10.2014**

(51) Int Cl.:
***H04B 1/7163*** *(2011.01)*

(86) Numéro de dépôt international:
**PCT/EP2014/071731**

(87) Numéro de publication internationale:
**WO 2015/055522 (23.04.2015 Gazette 2015/16)**

(54) **RÉCEPTEUR UWB À FONCTIONNEMENT INTERMITTENT**

UWB EMPFÄNGER MIT INTERVALLSCHALTUNG

INTERMITTENTLY OPERATING UWB RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.10.2013 FR 1360183**

(43) Date de publication de la demande:
**06.07.2016 Bulletin 2016/27**

(73) Titulaire: **Commissariat à l'Énergie Atomique et aux Énergies Alternatives
75015 Paris (FR)**

(72) Inventeurs:
• **HAMEAU, Frédéric**
**F-38250 Saint Nizier du Moucherotte (FR)**
• **MASSON, Gilles**
**38430 Saint-Jean de Moirans (FR)**
• **OUVRY, Laurent**
**F-38000 Grenoble (FR)**

(74) Mandataire: **Brevalex
95, rue d'Amsterdam
75378 Paris Cedex 8 (FR)**

(56) Documents cités:
• **IGOR DOTLIC ET AL: "Low Complexity Chirp Pulsed Ultra-Wideband System with Near-Optimum Multipath Performance", IEEE TRANSACTIONS ON WIRELESS COMMUNICATIONS, IEEE SERVICE CENTER, PISCATAWAY, NJ, US, vol. 10, no. 1, 1 janvier 2011 (2011-01-01), pages 208-218, XP011362745, ISSN: 1536-1276, DOI: 10.1109/TWC.2010.111910.100246**
• **SOONKOO KWON ET AL: "A joint timing synchronization, channel estimation, and SFD detection for IR-UWB systems", JOURNAL OF COMMUNICATIONS AND NETWORKS, NEW YORK, NY, USA,IEEE, US, vol. 14, no. 5, 1 octobre 2012 (2012-10-01), pages 501-509, XP011473058, ISSN: 1229-2370, DOI: 10.1109/JCN.2012.00007**
• **MORCHE DOMINIQUE ET AL: "Double-Quadrature UWB Receiver for Wide-Range Localization Applications With Sub-cm Ranging Precision", IEEE JOURNAL OF SOLID-STATE CIRCUITS, IEEE SERVICE CENTER, PISCATAWAY, NJ, USA, vol. 48, no. 10, 1 octobre 2013 (2013-10-01), pages 2351-2362, XP011527452, ISSN: 0018-9200, DOI: 10.1109/JSSC.2013.2272352 [extrait le 2013-09-20]**
• **BARRAS D ET AL: "A Low-Power Baseband ASIC for an Energy-Collection IR-UWB Receiver", IEEE JOURNAL OF SOLID-STATE CIRCUITS, IEEE SERVICE CENTER, PISCATAWAY, NJ, USA, vol. 44, no. 6, 1 juin 2009 (2009-06-01), pages 1721-1733, XP011258520, ISSN: 0018-9200, DOI: 10.1109/JSSC.2009.2020199**

**Description**

**DOMAINE TECHNIQUE**

La présente invention concerne le domaine des récepteurs UWB (*Ultra Wide Band)* et plus particulièrement les récepteurs UWB impulsionnels fonctionnant seulement pendant des cycles de travail (*duty cycled UWB receiver),*

**ÉTAT DE LA TECHNIQUE ANTÉRIEURE**

Les systèmes de télécommunication ultra-large bande (UWB), qu'ils soient de type impulsionnel (IR-UWB) ou non doivent émettre dans certaines bandes de fréquences, bien déterminées, fonction des réglementations régionales, et avec un spectre fréquentiel de largeur minimale (500 MHz aux Etats-Unis).

L'absence d'harmonisation des réglementations au niveau international d'une part et la multiplication des standards UWB pour différents types d'application, d'autre part, conduisent à prévoir des récepteurs capables d'opérer dans plusieurs bandes de fréquence.

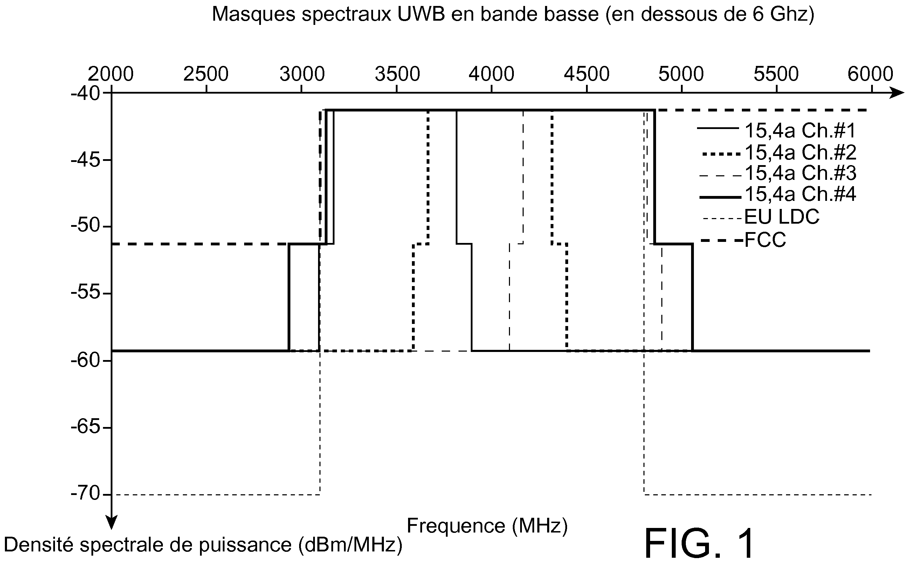

La Fig. 1 donne à titre d'exemple le plan de fréquence utilisé dans les standards IEEE 802.15.4a et IEEE 802.15.16, dans la bande 2-6 GHz. On rappelle que les standards IEEE 802.15.4a et IEEE 802.15.16 utilisent tous deux une transmission UWB impulsionnelle, le standard IEEE 802.15.4a étant relatif à la transmission UWB à bas débit ou LDR (*Low Data Rate)* pour des applications de localisation et le standard IEEE 802.15.6 concernant les réseaux corporels sans fil ou BAN (*Body Area Network)* dont une composante met en oeuvre une transmission UWB.

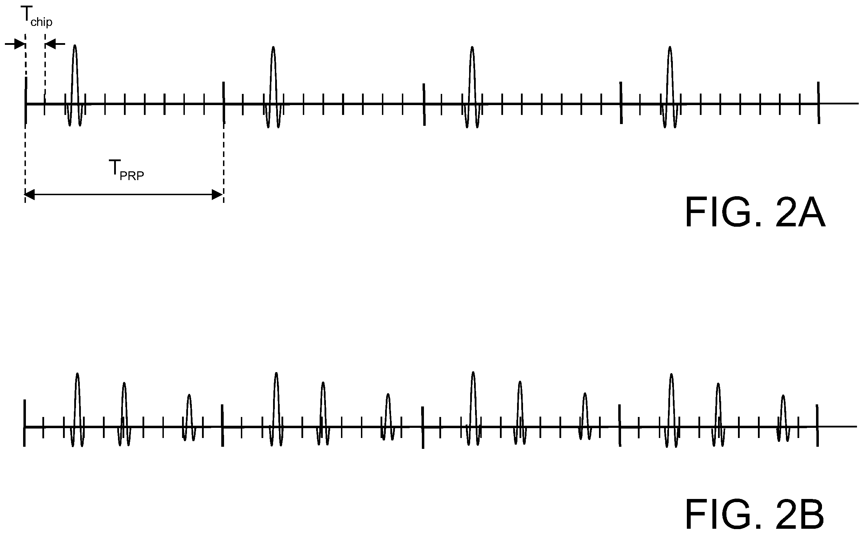

On a représenté en Fig. 2A un exemple de signal UWB impulsionnel, tel que transmis par un émetteur UWB. Ce signal est temporellement divisé en intervalles de transmission, chaque intervalle de transmission étant divisé en temps bribes (ou chips). Chaque intervalle de transmission peut comprendre une ou plusieurs impulsions élémentaires, chaque impulsion élémentaire étant située dans un temps bribe distinct, la position des impulsions élémentaires dans l'intervalle de transmission étant par exemple donné par un code d'accès. La ou les impulsion(s) élémentaire(s) peu(ven)t faire l'objet d'une modulation en position temporelle (modulation PPM) ou d'une modulation d'amplitude ou encore de phase (généralement une simple modulation de polarité BPSK) pour coder un symbole (généralement un symbole binaire) à transmettre.

On a représenté en Fig. 2B le même signal UWB impulsionnel en sortie d'un canal multi-trajet. On voit que chaque impulsion élémentaire a donné lieu à une pluralité d'impulsions élémentaires atténuées et retardées, chaque retard correspondant à un trajet du canal.

On distingue généralement les récepteurs UWB non cohérents et des récepteurs UWB cohérents. Dans un récepteur UWB cohérent, on suppose que l'on connait la réponse impulsionnelle du canal de transmission (par exemple au moyen d'une estimation préalable du canal). Le récepteur UWB cohérent effectue alors une corrélation du signal avec des impulsions élémentaires distribuées selon des retards correspondant aux différents trajets de la réponse impulsionnelle, autrement dit avec un signal de référence obtenu comme la convolution d'une impulsion élémentaire avec la réponse impulsionnelle du canal. La corrélation peut être obtenue à l'aide d'un filtre Rake dont chaque doigt comprend un filtre adapté à l'impulsion élémentaire et est associé à un trajet du canal. Les résultats de la corrélation sont ensuite combinés pour effectuer une détection des symboles transmis.

*A contrario,* dans un récepteur non cohérent, on ne dispose pas d'une connaissance *a priori* de la réponse impulsionnelle du canal ou, à tout le moins, pas de la réponse impulsionnelle complète au sens où la phase de cette réponse peut ne pas être connue. Le récepteur effectue une détection de l'énergie du signal reçu dans une pluralité de fenêtres temporelles distinctes, détermine la présence ou l'absence d'une impulsion dans chacune de ces fenêtres, et en déduit les symboles transmis.

On trouvera une description de l'architecture d'un récepteur UWB impulsionnel (encore dénommé IR-UWB pour Impulse Radio UWB) cohérent et de celle d'un récepteur IR-UWB non cohérent dans la thèse de M.G. Khan intitulée « On coherent and non-coherent receiver structures for impulse radio UWB systems », Blekinge Institute of Technology, 2009. Un exemple d'implémentation d'un récepteur IR-UWB est également illustre dans l'article de D.D. Wentzloff et al. intitule « Energy efficient pulsed UWB CMOS circuits and systems » publié dans Proc. of ICUWB Conference, 2007.

On connaît par ailleurs une architecture de récepteur IR-UWB à double quadrature. Dans un tel récepteur le signal impulsionnel reçu est démodulé en bande de base ou à une fréquence intermédiaire et la position d'une impulsion est déterminée au sein d'une fenêtre temporelle grâce à une projection sur une base de signaux de référence. La fenêtre temporelle est ensuite synchronisée sur l'impulsion reçue de manière à permettre une détection des symboles transmis. Une fois, la fenêtre synchronisée, la détection peut ensuite être effectuée de manière non-cohérente en sommant l'énergie reçue, ou de manière cohérente, par corrélation avec une impulsion élémentaire.

Une première architecture de récepteur à double quadrature a été décrite dans l'article de G. Masson et al. intitulé « A 1nJ/b 3.2 to 4.7 GHz UWB 50 Mpulses/s double quadrature receiver for communication and localization » publié dans Proc. of the ESSCIRC 2010, 14-16 Sept. 2010, Seville, Spain.

Cette architecture a ensuite fait l'objet d'un perfectionnement dans la demande FR 12 59861, intitulée « Méthode de détermination du temps d'arrivée d'une impulsion UWB et récepteur correspondant » déposée au nom de la présente demanderesse.

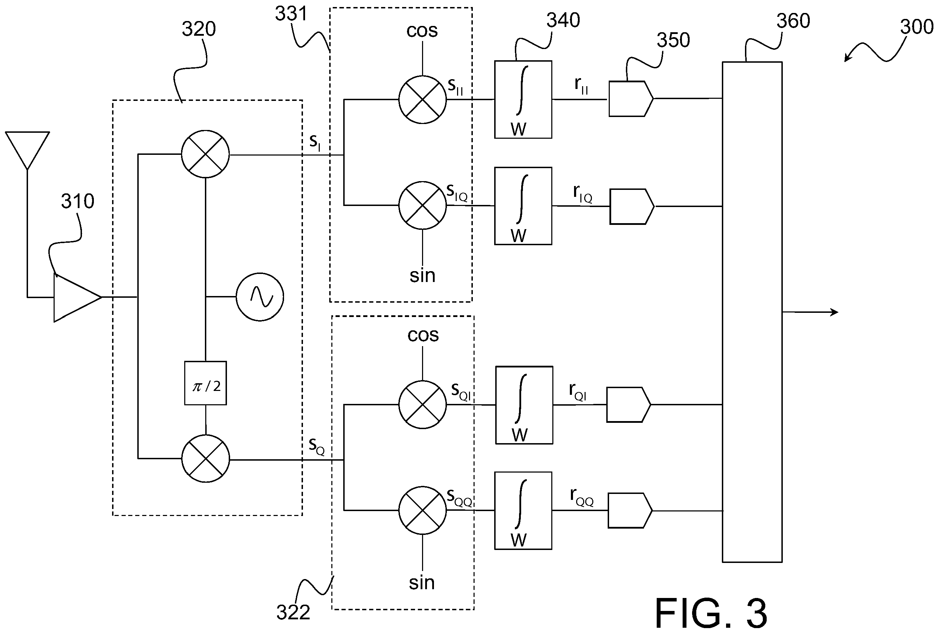

L'architecture générale d'un récepteur UWB incohérent a été illustrée en Fig. 3.

Le récepteur 300 comprend, après amplification par un amplificateur bas-bruit (LNA), 310, un premier étage, 320, effectuant une translation en bande de base à l'aide d'un mélange en quadrature à la fréquence centrale du signal. Les signaux en phase et en quadrature sont respectivement notés $S_I$ et $S_O$.

Le récepteur 300 comporte en outre un second étage comprenant un premier mélangeur en quadrature 331, en sortie de la voie en phase du premier étage, et un second mélangeur en quadrature 332, en sortie de la voie en quadrature du premier étage. Les mélangeurs en quadrature 331 et 232 effectuent une projection des signaux $S_I/S_O$, sur une base de signaux de référence. Les signaux obtenus par projection, notés $S_{II}/S_{IQ}$ pour la voie I et $S_{OI}/S_{QO}$ pour la voie Q, sont intégrés à l'intérieur d'une fenêtre temporelle, au moyen des intégrateurs 340.

La base de référence peut être constituée d'un couple de sinusoïdes en quadrature ayant une période égale au double de la largeur de la fenêtre temporelle d'intégration. Les signaux intégrés, notés $r_{II}, r_{IQ}, r_{QI}, r_{QQ}$ sont convertis en des signaux numériques dans des convertisseurs analogique/numérique 350, avant d'être fournis à un module de détection, 390.

Quel que soit le type de récepteur IR-UWB, la nature impulsionnelle du signai permet de réduire la consommation du récepteur en faisant fonctionner l'étage RF de ce dernier par intermittence, seulement lors d'intervalles d'écoute des impulsions. Un récepteur IR-UWB opérant selon ce mode est qualifié comme étant à fonctionnement intermittent ou cyclique (*duty-cycled*). Etant donné le faible rapport cyclique d'un signal UWB impulsionnel, la réduction de consommation en énergie du récepteur est très significative.

Un récepteur IR-UWB à fonctionnement intermittent a été notamment décrit dans l'article de X. Wang et al. intitulé « A high-band IR-UWB chipset for real-time duty-cycled communication and localization systems » publié dans Proc. of IEEE Asian solid-sate circuits conference, pp. 381-384, Nov. 2011, Jeju, Korea.

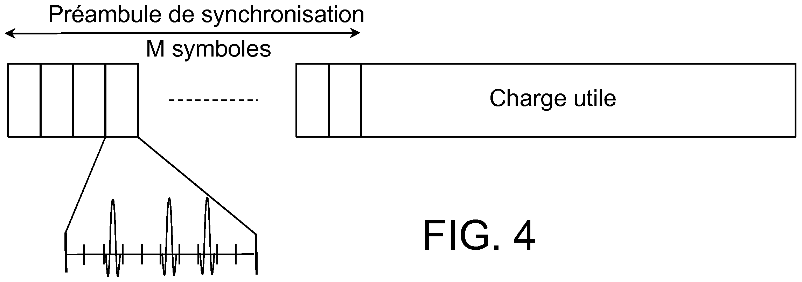

Toutefois, ce fonctionnement intermittent suppose que le récepteur se soit préalablement synchronisé sur les impulsions du signal reçu. A cette fin, l'émetteur IR-UWB transmet un préambule de synchronisation comme indiqué en Fig. 4. Le préambule de synchronisation, 410, est ici constitué par *M* symboles successifs (chaque symbole étant transmis à l'aide d'un intervalle de transmission et pouvant donc être codé à l'aide de N impulsions élémentaires, 411, comme Indiqué sur la figure). Le préambule de synchronisation est suivi d'une charge utile (*payload*) 420.

L'inconvénient du récepteur IR-UWB à fonctionnement intermittent tel que décrit dans l'article précité est cependant de devoir fonctionner en continu pendant la phase de synchronisation. Ainsi, pendant toute la durée du cette phase, l'étage RF du récepteur IR-UWB doit être alimenté et consomme par conséquent de l'énergie.

L'article de I. Doltic et al. intitulé « Low complexity chirp pulsed ultra-wideband system with near-optimum multipath performance » publié dans IEEE Trans. on Wireless Comm., Vol.10, No. 1, Jan. 2011, pp. 208-218 décrit un système UWB impulsionnel dont le récepteur comprend un étage RF destine à amplifier et à translater en bande de base le signal reçu, suivi par un étage de traitement en bande de base.

L'article de S. Kwon et al. intitulé «A joint timing synchronization, channel estimation and SFD detection for IR-UWB systems » publié dans Journal of Comm. and Networks, Vol. 14, No. 5, Oct. 2012, pp, 501-509 décrit une méthode de synchronisation et d'estimation de canal pour un système IR-UWB conforme au standard IEEE 802.15.a. La phase de synchronisation comprend une phase de synchronisation grossière, une phase de synchronisation fine et une étape de décision.

L'article de D. Morche et al. intitulé « Double quadrature UWB receiver for wide-range localization applications with sub-cm ranging precision » publié dans IEEE Journal of Solid State Circuits, Vol. 4, No. 10, Oct. 2013, pp. 2351. décrit l'architecture d'un récepteur UWB à double quadrature. L'article de Barras D. et al. intitulé <<A low power baseband ASIC for an energy-collection IR-UWB receiver>>, IEEE Journal of solid-state circuits, USA, vol. 44, no. 6, 1 juin 2009, décrit un récepteur de signal UMB impulsionnel, ledit signal UWB étant divisé temporellement en intervalles élémentaires de durée prédéterminée, un symbole étant transmis sur une pluralité N d'intervalles élémentaires, chaque intervalles élémentaire, comprenant une impulsions élémentaires, le signal UWB comprenant un préambule de synchronisation suivi d'une charge utile, le préambule de synchronisation comprenant une séquence de M symboles identiques; ledit récepteur comprenant un étage RF suivi d'un étage de traitement en bande de base, l'étape RF étant adapté a amplifier ledit signal et à effectuer une translation en bande de base du signal ainsi amplifié, caractérisé en ce que l'étage de traitement en bande de base comprend un module de contrôle adapté à contrôler les positions respectives des fenêtres d'acquisition au sein d'un intervalle de réception, de manière à balayer cet intervalle au cours d'une phase de synchronisation, ledit étage RF ne fonctionnant, au cours de cette phase, que pendant ladite pluralité de fenêtres d'acquisition. Un objet de la présente invention est de proposer un récepteur IR-UWB à fonctionnement intermittent requérant une consommation d'énergie moindre que celui connu de l'état de la technique, et notamment de réduire sa consommation pendant la durée de synchronisation du récepteur.

**EXPOSÉ DE L'INVENTION**

La présente invention est définie par un récepteur de signal UWB impulsionnel, ledit signal UWB étant divisé temporellement en intervalles élémentaires de durée prédéterminée ($T_{PRP}$), un symbole étant transmis sur une pluralité $N$ d'intervalles élémentaires, chaque intervalle élémentaire comprenant une impulsion élémentaire, le signal UWB comprenant un préambule de synchronisation suivi d'une charge utile, le préambule de synchronisation comprenant une séquence de $M$ symboles identiques, ledit récepteur comprenant un étage RF suivi d'un étage de traitement en bande de base, l'étage RF étant adapté à amplifier ledit signal et à effectuer une translation en bande de base du signal ainsi amplifié. L'étage de traitement en bande de base comprend :

un processeur en râteau comprenant une pluralité $K$ de doigts temporels, chaque doigt temporel étant adapté à effectuer un traitement une fenêtre d'acquisition associée audit doigt ;
un module de détection pour estimer au moins un symbole reçu à partir des résultats de traitement fournis par lesdits doigts ;
un module de contrôle adapté à contrôler les positions respectives des fenêtres d'acquisition au sein d'un intervalle de réception, de manière à balayer cet intervalle au cours d'une phase de synchronisation, ledit étage RF ne fonctionnant, au cours de cette phase, que pendant ladite pluralité de fenêtres d'acquisition.

Ledit traitement est de préférence une intégration, chaque doigt temporel intégrant alors le signal en bande de base dans la fenêtre d'acquisition associée à ce doigt.

Avantageusement, le module de contrôle pilote les fenêtres temporelles de sorte qu'elles glissent d'un pas temporel prédéterminé d'un intervalle de réception au suivant.

L'étage RF comprend typiquement un amplificateur bas bruit suivi d'un premier étage de mélange en quadrature fournissant une voie en phase et une voie en quadrature.

L'étage RF comprend avantageusement une paire de filtres passe-bas ou passe-bande de fréquences de coupure contrôlable, ladite paire de filtres filtrant respectivement la voie en phase et la voie en quadrature.

Selon une première variante, l'étage RF comprend aussi un second étage de mélange translatant en bande de base la voie en phase pour fournir des premier et second signaux orthogonaux et la voie en quadrature pour fournir des troisième et quatrième signaux orthogonaux.

Selon une seconde variante, l'étage RF comprend un second étage de mélange projetant la voie en phase sur une base orthogonale de signaux de référence, pour fournir des premier et second signaux orthogonaux, et projetant la voie en quadrature sur la même base, pour fournir des troisième et quatrième signaux orthogonaux.

De préférence, chaque doigt temporel comprend des premier, second, troisième et quatrième intégrateurs pour intégrer respectivement les premier, second, troisième et quatrième signaux orthogonaux sur la fenêtre d'acquisition associée au dit doigt, les résultats d'intégration de ces intégrateurs étant fournis au module de détection.

Les résultats d'intégration des premier, second, troisième et quatrième intégrateurs peuvent alors être numérisés dans des premier, second, troisième et quatrième convertisseurs analogique/numérique avant d'être fournis au module de détection.

Dans tous les cas, l'alimentation de l'étage RF peut être coupée à l'extérieur de ladite pluralité de fenêtres d'acquisition.

Avantageusement, au terme de la phase de synchronisation, les énergies reçues respectivement dans lesdites fenêtres d'acquisition, au cours du balayage de réception, sont comparées entre elles et une seconde pluralité ($K'$) de positions temporelles est déterminée correspondant aux énergies reçues les plus élevées, les fenêtres d'acquisition du processeur en râteau étant alors respectivement positionnées sur cette seconde pluralité de positions temporelles dans une phase de réception de la charge utile faisant suite à la phase de synchronisation.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente un exemple de plan de fréquence dans une bande spectrale UWB;
Les Fig. 2A et 2B représentent respectivement un signal émis par un émetteur et un signal reçu par un récepteur IR-UWB ;
La Fig. 3 représente de manière schématique un premier exemple de récepteur UWB connu de l'état de la technique;
La Fig. 4 représente la structure d'une transmission IR-UWB, connue de l'état de la technique ;
La Fig. 5 représente de manière schématique la structure d'un récepteur IR-UWB selon un mode de réalisation de l'invention;
La Fig. 6 représente de manière schématique un récepteur IR-UWB selon un exemple particulier d'implémentation de l'invention;
La Fig. 7 illustre la construction d'un préambule de synchronisation pouvant être utilisé dans le cadre de la présente invention ;
La Fig. 8 illustre le principe du balayage d'un symbole de synchronisation par des fenêtres d'acquisition ;
Les Figs. 9A à 9D illustrent le balayage d'un intervalle de réception par les fenêtres d'acquisition, au cours de la phase de synchronisation du récepteur ;
La Fig. 10 représente les fenêtres d'acquisition associées aux différents doigts du processeur en râteau, pendant la phase de démodulation et de poursuite du récepteur.

## EXPOSÉ DÉTAILLÉ DE MODES DE RÉALISATION PARTICULIERS

On considérera à nouveau dans la suite un récepteur destiné à recevoir un signal Impulsionnel UWB (récepteur IR-UWB), tel que celui décrit dans la partie introductive. Le signal impulsionnel UWB est divisé en intervalles de transmission, chaque intervalle de transmission étant lui-même divisé en temps bribes (chips). Un symbole (typiquement un symbole binaire) est transmis sur un intervalle de transmission au moyen d'une séquence d'impulsions élémentaires (pouvant se réduire à une impulsion unique) réparties sur les différentes bribes de l'intervalle. Le symbole module ladite séquence à l'aide d'une modulation PPM et/ou PAM (voire QAM).

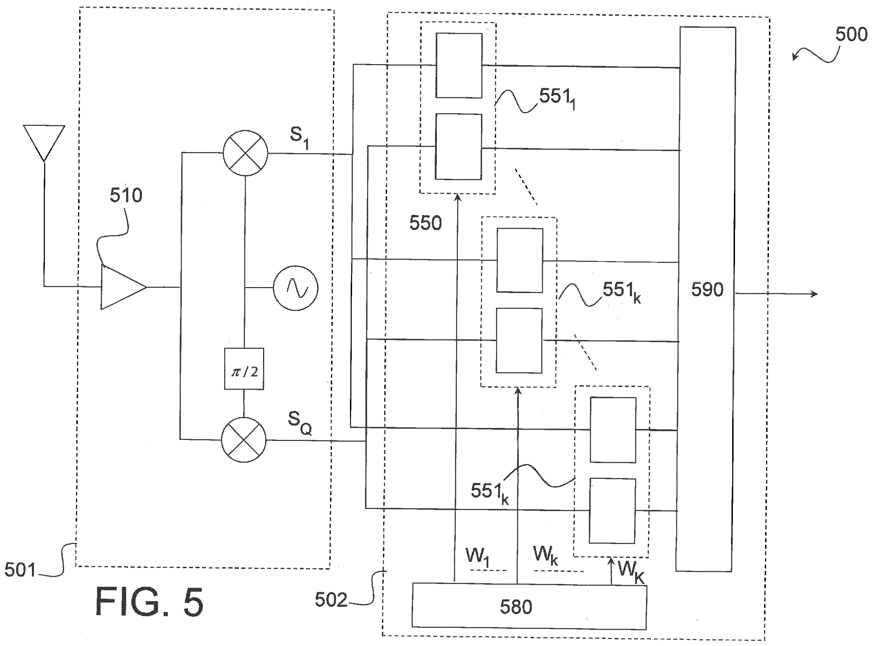

La Fig. 5 représente l'architecture d'un récepteur IR-UWB à fonctionnement intermittent selon un mode de réalisation de l'invention.

Le récepteur 500 comprend un étage RF, 501, et un étage de traitement en bande de base, 502.

L'étage RF, 501, comprend un amplificateur bas-bruit, 510, un ou plusieurs étages de démodulation, pour amener le signal reçu en bande de base. Par exemple l'étage RF peut comprendre un étage de démodulation à une fréquence intermédiaire suivi, le cas échéant, d'un étage de démodulation en bande de base ou d'un étage de projection selon une base orthogonale de signaux de référence.

Dans tous les cas, l'étage de traitement en bande de base, 502, comprend un processeur en râteau (Rake), 550, à $K$ doigts temporels $551_1,...,551_K$, chaque doigt temporel étant adapté à traiter ledit signal en bande de base pendant une fenêtre temporelle déterminée, dite aussi fenêtre d'acquisition. Les fenêtres temporelles des différents doigts du processeur en râteau 550 sont contrôlées par un module de contrôle 580. Plus précisément, le module de contrôle 580 détermine la position et, le cas échéant, la durée de la fenêtre temporelle pour chaque doigt temporel. Le module de détection 590 estime le symbole reçu à partir des résultats de traitement des $K$ doigts temporels.

Le traitement effectué dans chacun des $K$ doigts temporels $551_1,...,551_K$, est identique.

Selon une première variante, le traitement effectué dans les doigts temporels est une opération d'intégration. Plus précisément, chaque doigt $551_k$ effectue une intégration du signal en bande de base (voies I et Q) pendant une fenêtre temporelle $W_k$.

Selon une seconde variante, le traitement effectué dans les doigts temporels est un filtrage adapté à une impulsion élémentaire du signal. Plus précisément, chaque doigt $551_k$ est alors un filtre adapté à une impulsion élémentaire dans la fenêtre $W_k$. Les sorties des filtres élémentaires peuvent être combinées au moyen d'une combinaison MRC (Maximum Ratio Combining) et le résultat de la combinaison est comparé à un seuil pour en déduire le symbole reçu au sein du module de détection 590.

L'homme du métier pourra envisager d'autres variantes de traitement au sein des doigts temporels sans pour autant sortir du cadre de la présente invention. Par exemple, le traitement pourra consister, selon le type de modulation envisagé, en un filtrage non linéaire, une détection de signal crête, une détection quadratique, etc.

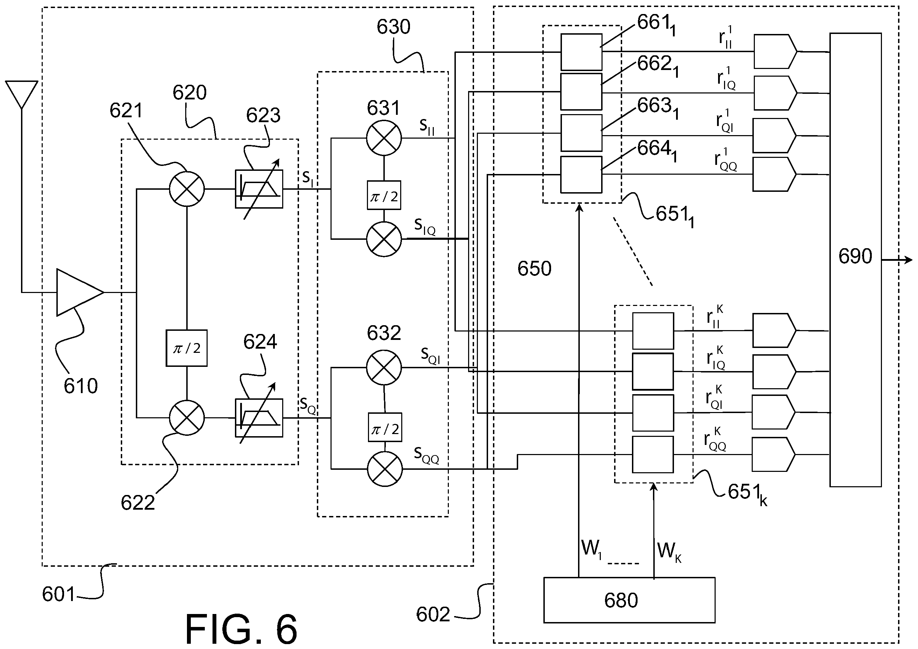

La Fig. 6 représente un exemple de réalisation d'un récepteur IR-UWB conforme à la structure de la Fig. 5.

Le récepteur 600 comprend une section RF, 601, incluant un amplificateur bas bruit (LNA), 610, suivi d'un premier étage de démodulation en quadrature, 620, pour amener le signal reçu en bande de base ou à une fréquence intermédiaire. Le premier étage de démodulation comprend deux démodulateurs en quadrature 621, 622, par exemple à la fréquence centrale du signal, fournissant respectivement un signal en phase $s_I$ et un signal en quadrature $s_Q$. Les signaux $s_I$ et $s_Q$ sont filtrés au moyen des filtres 623 et 624. Ces filtres présentent des fréquences de coupure basse et haute contrôlables. Selon la configuration envisagée, ils peuvent effectuer un filtrage passe-bas (en cas de démodulation en bande de base) ou passe-bande (en cas de démodulation à une fréquence intermédiaire). Ils peuvent être avantageusement réalisés sous la forme de filtres gm-C de type biquad. On rappelle que dans un tel filtre la bande passante peut être modifiée en faisant varier une tension de contrôle. Un exemple de filtre gm-C est décrit dans l'article de B. Nauta intitulé « A CMOS transconductance-C filter technique for very high frequencies », IEEE Journal of Solid State Circuits, vol. 27, No. 2, Feb. 1992.

Les signaux $s_I$ et $s_Q$ ainsi filtrés sont éventuellement amplifiés dans des amplificateurs sur chaque voie (non représentés) avant de passer dans un second étage de mélange en quadrature, 630. Plus précisément, le second étage, 630, comprend un premier mélangeur en quadrature 631, en sortie de la voie en phase du premier étage, et un second mélangeur en quadrature 632, en sortie de la voie en quadrature du premier étage.

Selon une première configuration, les mélangeurs en quadrature 631 et 632 effectuent une projection de chacun des signaux $s_I$ et $s_Q$ sur une base orthogonale de signaux de référence. Comme dans la demande FR 12 59861 précitée, la base de référence peut être constituée d'un couple de sinusoïdes en quadrature ayant une période égale au double de la largeur de la fenêtre temporelle d'intégration voire à la largeur de la fenêtre de la fenêtre temporelle d'intégration.

Selon une seconde configuration, les deux mélangeurs en quadrature effectuent une démodulation des signaux $S_I$, et $S_Q$ à la fréquence intermédiaire pour les ramener en bande de base. Plus précisément le signal à la fréquence intermédiaire $S_I$ est démodulé en un premier signal en phase $S_{II}$ et un premier signal en quadrature $S_{IQ}$, dénommés premier et second signaux orthogonaux, et le signal à la fréquence intermédiaire $S_O$ est démodulé en un second signal en phase $S_{QI}$ et un second signal en quadrature, $S_{QQ}$, dénommés troisième et quatrième signaux orthogonaux.

Quelle que soit la configuration, les signaux en sortie du second étage de mélange en quadrature sont traités, dans l'étage de traitement en bande de base, 602, par un processeur en râteau, 650, à $K$ doigts temporels, $651_1,...,651_K$, chaque doigt temporel étant associé à une fenêtre d'acquisition $W_k$ centrée sur un temps $t_k$, et chaque doigt $651_k$ comprenant quatre modules de traitement $661_k$, $662_k$, $663_k$, $664_k$, opérant respectivement sur les premier, second, troisième et quatrième signaux orthogonaux, $S_{II}, S_{IQ}, S_{QI}, S_{QQ}$, dans la fenêtre temporelle $W_k$. Les différents modules de traitement $661_k$, $662_k$, $663_k$, $664_k$, effectuent une opération identique, par exemple une intégration dans la fenêtre d'acquisition $W_k$, un filtrage adapté à une impulsion dans cette fenêtre, une détection quadratique ou une détection crête comme précédemment décrit.

Les fenêtres $W_k$ associées aux différents doigts temporels sont contrôlées au moyen du module de contrôle 680.

Les résultats du traitement des signaux $S_{II}, S_{IQ}, S_{QI}, S_{QQ}$ dans les modules respectifs $661_k, 662_k, 663_k, 664_k$ du doigt $651_k$ sur la fenêtre temporelle $W_k$ sont notés $r_{II}^k, r_{IQ}^k, r_{QI}^k, r_{QQ}^k$. Les résultats de traitement $r_{II}^k, r_{IQ}^k, r_{QI}^k, r_{QQ}^k$ sont convertis en des signaux numériques dans des convertisseurs analogique/numérique 670, avant d'être fournis au module de détection, 690. Ce module de détection peut par exemple effectuer une somme cohérente ou non cohérente des résultats $r_{II}^k, r_{IQ}^k, r_{QI}^k, r_{QQ}^k$, et comparer cette cette somme avec une valeur de seuil prédéterminée pour en déduire le symbole reçu.

L'homme du métier comprendra que la conversion analogique/numérique peut intervenir plus en amont de la chaine de traitement, par exemple avant le traitement en râteau (le traitement étant alors réalisé de manière numérique) voire avant un étage de mélange en quadrature (le mélange en quadrature étant alors réalisé de manière numérique).

L'idée à la base de l'invention est de tirer parti des doigts temporels du processeur en râteau (Rake) pendant le préambule de synchronisation pour permettre un fonctionnement intermittent du récepteur.

Plus précisément, on distinguera le fonctionnement du processeur en râteau pendant la phase de synchronisation, autrement dit la phase de réception du préambule de synchronisation, et la phase de démodulation et poursuite, c'est-à-dire la phase de réception de la charge utile du paquet.

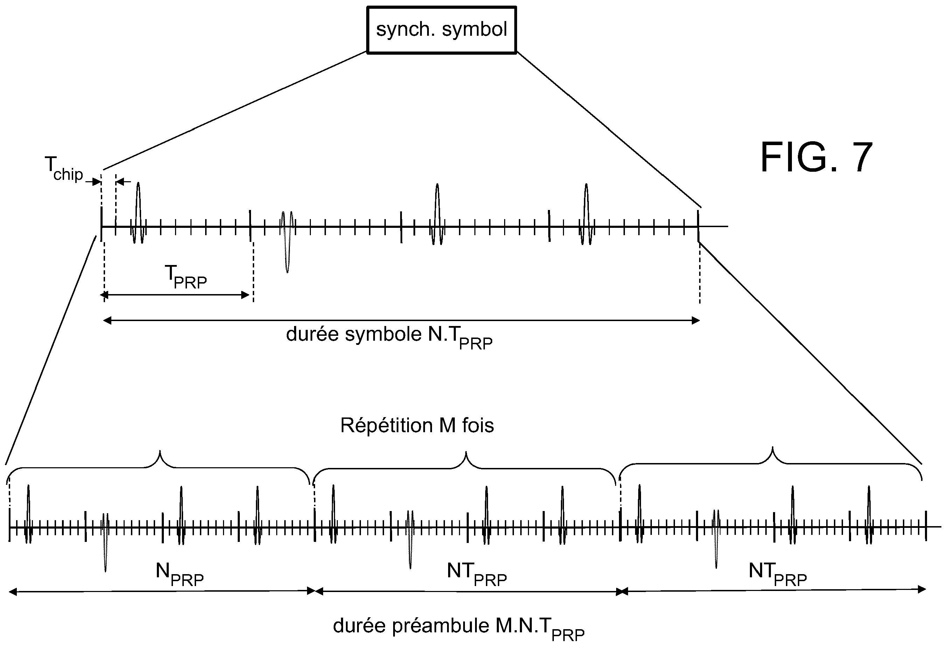

Le préambule de synchronisation comprend généralement une séquence de $M \geq 1$ symboles de synchronisation prédéterminés, identiques, chaque symbole de synchronisation étant codé sur $N$ Intervalles de transmission élémentaires de durée $T_{PRP}$, chaque intervalle de transmission élémentaire pouvant contenir une impulsion UWB élémentaire (voire un motif de plusieurs impulsions élémentaires), comme représenté en Fig. 7. On comprend par conséquent qu'un symbole de synchronisation est transmis à l'aide d'une séquence de durée $NT_{PRP}$, les impulsions de la séquence pouvant être codée à l'aide d'un modulation BPSK ou PPM par exemple. Ainsi, la durée du préambule de synchronisation est de $M.N.T_{PRP}$.

Dans le cas illustré en Fig. 7, un symbole de synchronisation est codé sur $N = 4$ impulsions élémentaires et ce symbole de synchronisation est répété $M = 3$ fois dans le préambule de synchronisation. Le code utilisé est un code BPSK et la séquence de codage est ici {+1,-1,+1,+1}.

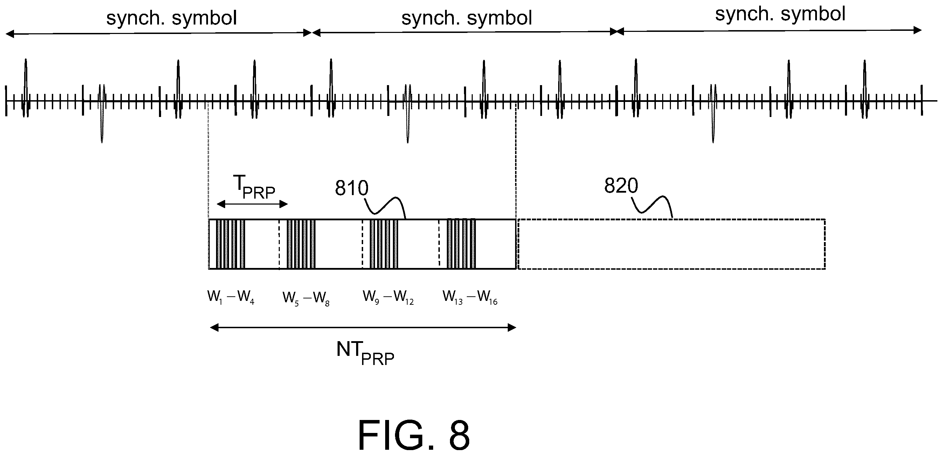

La Fig. 8 illustre le balayage d'un préambule de synchronisation par une fenêtre de réception 810 de durée égale à la durée symbole, à savoir $NT_{PRP}$. Pour des raisons de simplification, le préambule de synchronisation a été représenté ici en supposant que le canal était mono-trajet. La fenêtre de réception 810 est divisée en $N$ intervalles élémentaires de durée $T_{PRP}$ chacun. Dans chacun de ces intervalles élémentaires on a représenté des $NK$ fenêtres d'acquisition, soit $W_1$ - $W_4$ pour le premier intervalle, $W_5$ - $W_8$ pour le second intervalle, $W_9$ - $W_{12}$ pour le troisième intervalle et $W_{13}$ - $W_{16}$ pour le dernier intervalle. De manière générale, dans la phase de synchronisation, on prévoit $K$ fenêtres d'acquisition par intervalle élémentaire $T_{PRP}$. Ces $K$ fenêtres d'acquisition sont respectivement associées aux $K$ doigts du processeur en râteau.

Le préambule de synchronisation présentant une périodicité de $NT_{PRP}$, les signaux reçus par des fenêtres de réception successives (810, 820,...) sont identiques (au bruit et aux variations de la réponse du canal près). D'une fenêtre de réception à la suivante, on fait glisser d'un pas $\delta$ les $NK$ fenêtres d'acquisition au sein de la fenêtre de réception. Le nombre $K$ de doigts temporels, l'espacement $\theta$ entre les fenêtres d'acquisition et le pas de glissement $\delta$ de ces fenêtres sont choisis de manière à couvrir la durée $NT_{PRP}$ d'un symbole de synchronisation au bout de $M'$ fenêtres. La longueur $M$ du préambule est choisie telle que $M \geq M'$ c'est-à-dire de manière à ce qu'un symbole de synchronisation soit balayé au moins une fois pendant la durée du préambule de synchronisation.

Il est important de noter que, durant la phase de synchronisation, le récepteur UWB ne fonctionne que de manière intermittente, pendant les fenêtres d'acquisition $W_k$, $k = 1,...,NK$. Plus précisément, l'étage RF du récepteur ne sera alimenté que pendant la durée de ces fenêtres d'acquisition, c'est-à-dire pendant une fraction de temps $K\tau/T_{PRP}$ où $\tau$ est la largeur des fenêtres temporelles, avantageusement choisie de l'ordre de la largeur de l'impulsion élémentaire.

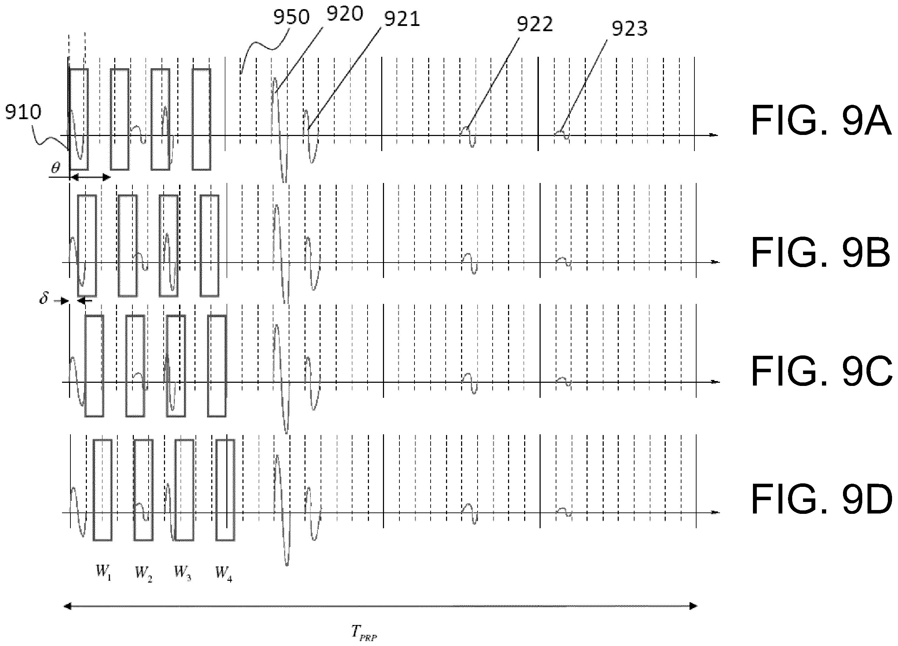

Les Figs. 9A à 9D correspondent à des fenêtres de réception successives. On a représenté dans chacune d'entre elles les positions des fenêtres d'acquisition. Pour simplifier la présentation, on a simplement fait figurer le premier intervalle élémentaire de la fenêtre de réception et donc les fenêtres d'acquisition $W_1$, à $W_4$.

Du fait de l'absence de synchronisation initiale, le début de l'intervalle de réception 910 ne coïncide pas nécessairement avec le début de l'intervalle de transmission (on suppose ici pour simplifier que le temps de propagation dans le canal de transmission est nul), représenté ici par 950.

En outre, le canal comprend en règle générale un trajet direct (LOS) ainsi que des trajets indirects correspondant à des réflexions sur l'environnement. En cas d'absence de ligne de visée directe (NLOS), le canal ne comprend que des trajets indirects. Dans l'exemple illustré en Figs. 9A-9D, le canal comprend un trajet direct le long duquel s'est propagée l'impulsion 920 et trois trajets indirects le long desquels se sont propagées respectivement les impulsions 921, 922, 923.

Dans la phase de synchronisation, les fenêtres d'acquisition $W_k$, $k = 1,..., K$ au sein d'un même intervalle élémentaire sont avantageusement choisies équidistantes.

En choisissant convenablement les paramètres $K, \theta, \delta$ comme indiqué plus haut, les fenêtres d'acquisition $W_k$, $k = 1,....,K$ balayent la totalité du premier intervalle élémentaire au plus tard au bout de $M$ fenêtres de réception. De manière générale, les fenêtres d'acquisition $W_{(n-1)K+k}$, $k = 1,...,K$ balayent la totalité du n^ème intervalle élémentaire au bout de $M$ fenêtres de réception. Ainsi, au bout d'un temps $MNT_{PRP}$ la totalité d'un symbole de synchronisation a été acquis.

La synchronisation requiert de déterminer la position d'un symbole de synchronisation par rapport à la fenêtre de réception. Pour ce faire, on stocke pour chaque fenêtre de réception $m = 1,..., M$ les $KN$ résultats de traitement du processeur en râteau dans les fenêtres d'acquisition $W_{(n-1)K+k}$, $n = 1,..., N$, $k = 1,...,K$, sachant que chaque fenêtre $W_{(n-1)K+k}$ est décalée de $\delta$ entre deux fenêtres de réception consécutives.

Si l'on note $r_{(n-1)K+k}$ le résultat de traitement (par exemple intégration), de l'un des signaux $s_{II}, s_{IQ}, s_{QI}, s_{QQ}$ en sortie du second étage de mélange, sur la fenêtre d'acquisition $W_{(n-1)K+k}$, on effectue pour chaque fenêtre de réception une corrélation cyclique des résultats de traitement avec la séquence de codage :

$$C_i^k = \sum_{n=1}^{N} \varepsilon_n r_{mod(n-1)K+i+i,N} \,, \; k = 1,..,K$$

où $\varepsilon = \varepsilon_1,...,\varepsilon_N$ est la séquence de codage (ici une modulation BPSK). Lorsque la modulation est une modulation PPM, la sommation est effectuée de la même façon sur les N résultats de traitement, à ceci près que la position des fenêtres $W_{(n-1)K+k}$ dépendent alors de la position de modulation donnée par $\varepsilon_n$.

Lorsque l'on obtient une valeur $C_i^k$ supérieure à un seuil prédéterminé (indicatif du maximum de corrélation) pour une même valeur de i et une même position des fenêtres $W_{(n-1)K+k}$, la valeur $i$ donne la position temporelle de la fenêtre de réception par rapport au début du symbole de synchronisation.

On peut alors sélectionner parmi les $MNK$ résultats de traitement correspondant au balayage de l'intervalle de réception, au moyen d'une comparaison, les $K'$ valeurs présentant la plus forte amplitude. Ces $K'$ valeurs correspondent aux $K'$ trajets les plus significatifs du canal. Le nombre $K'$ peut être choisi en fonction de la complexité du traitement souhaité (dépendant des ressources calculatoires du récepteur) ou bien en fixant un seuil d'amplitude minimale.

Lors de la phase de réception de la charge utile (phase de poursuite) les $K'$ doigts du filtre Rake sont centrés sur les $K'$ fenêtres d'acquisition, sélectionnées au terme de la phase de synchronisation

Pendant la phase de réception, le récepteur continue à fonctionner en mode intermittent, pendant les $K'$ fenêtres d'acquisition sélectionnée, autrement dit pendant une fraction de temps donnée $K'\tau/T_{PRP}$.

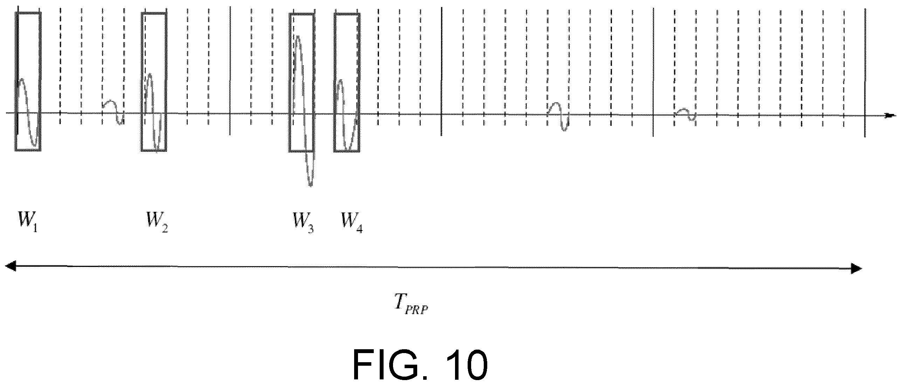

La Fig. 10 représente un intervalle de réception de la charge utile dans laquelle $K'$ fenêtres d'acquisition ont été sélectionnées, correspondant aux $K'$ impulsions de plus grande amplitude (c'est-à-dire les plus énergétiques) dans ledit intervalle. Le module de contrôle du récepteur pilote les positions temporelles des différents doigts de sorte à ce que ceux-ci effectuent le traitement du signal en bande de base pendant ces $K'$ fenêtres d'acquisition.

Les résultats $r_{II}^k, r_{IQ}^k, r_{QI}^k, r_{QQ}^k$, $k = 1,.... K'$ sont ensuite sommés de manière cohérente ou non cohérente dans le module de detection comme décrit plus haut.

## Revendications

**1.** Récepteur de signal UWB impulsionnel, ledit signal UWB étant divisé temporellement en intervalles élémentaires de durée prédéterminée ($T_{PRP}$), un symbole étant transmis sur une pluralité $N$ d'intervalles élémentaires, chaque intervalle élémentaire comprenant une impulsion élémentaire, le signal UWB comprenant un préambule de synchronisation suivi d'une charge utile, le préambule de synchronisation comprenant une séquence de $M$ symboles identiques;

ledit récepteur comprenant un étage RF (501) suivi d'un étage de traitement en bande de base (502), l'étage RF étant adapté à amplifier ledit signal et à effectuer une translation en bande de base du signal ainsi amplifié, **caractérisé en ce que** le récepteur reçoit ledit signal UWB pendant une fenêtre de réception de durée égale à la durée symbole, divisée en *N* intervalles de réception et l'étage de traitement en bande de base comprend :

un processeur en râteau (550, 650) comprenant une pluralité *K* de doigts temporels ($551_1$,...,$551_K$), chaque doigt temporel étant adapté à effectuer un traitement sur une fenêtre d'acquisition associée audit doigt, chaque intervalle de réception comprenant *K* fenêtres d'acquisition ;

un module de detection (590, 690) pour estimer au moins un symbole reçu à partir des résultats de traitement fournis par lesdits doigts :

un module de contrôle (580, 680) adapté à contrôler les positions respectives des fenêtres d'acquisition au sein d'un intervalle de réception, de manière à balayer cet intervalle au cours d'une phase de synchronisation, ledit étage RF ne fonctionnant, au cours de cette phase, que pendant ladite pluralité de fenêtres d'acquisition.

2. Récepteur de signai UWB impulsionnel selon la revendication 1, **caractérisé en ce que** ledit traitement est une intégration, chaque doigt temporel intégrant le signal en bande de base dans la fenêtre d'acquisition associée à ce doigt.

3. Récepteur de signal UWB impulsionnel selon la revendication 2, **caractérisé en ce que** le module de contrôle (560,660) pilote les fenêtres temporelles de sorte qu'elles glissent d'un pas temporel prédéterminé d'un intervalle de réception au suivant.

4. Récepteur de signal UWB impulsionnel selon la revendication 2 ou 3, **caractérisé en ce que** l'étage RF comprend un amplificateur bas bruit suivi d'un premier étage de mélange en quadrature fournissant une voie en phase et une voie en quadrature.

5. Récepteur de signal UWB impulsionnel selon la revendication 4, **caractérisé en ce que** l'étage RF comprend une paire de filtres passe-bas ou passe-bande de fréquences de coupure contrôlable, ladite paire de filtres filtrant respectivement la voie en phase et la voie en quadrature.

6. Récepteur de signal UWB impulsionnel selon la revendication 4 ou 5, **caractérisé en ce que** l'étage RF comprend un second étage de mélange translatant en bande de base la voie en phase pour fournir des premier et second signaux orthogonaux et la voie en quadrature pour fournir des troisième et quatrième signaux orthogonaux.

7. Récepteur de signai UWB impulsionnel selon la revendication 4 ou 5, **caractérisé en ce que** l'étage RF comprend un second étage de mélange projetant la voie en phase sur une base orthogonale de signaux de référence, pour fournir des premier et second signaux orthogonaux, et projetant la voie en quadrature sur la même base, pour fournir des troisième et quatrième signaux orthogonaux.

8. Récepteur de signal UWB impulsionnel selon la revendication 6 ou 7, **caractérisé en ce que** chaque doigt temporel comprend des premier, second, troisième et quatrième intégrateurs pour intégrer respectivement les premier, second, troisième et quatrième signaux orthogonaux sur la fenêtre d'acquisition associée au dit doigt, les résultats d'intégration de ces intégrateurs étant fournis au module de détection.

9. Récepteur de signal UWB impulsionnel selon la revendication 8, **caractérisé en ce que** les résultats d'intégration des premier, second, troisième et quatrième intégrateurs sont numérisés dans des premier, second, troisième et quatrième convertisseurs analogique/numérique avant d'être fournis au module de détection.

10. Récepteur de signal UWB impulsionnel selon l'une des revendications précédentes, **caractérisé en ce que** l'alimentation de l'étage RF est coupée à l'extérieur de ladite pluralité de fenêtres d'acquisition.

11. Récepteur de signal UWB impulsionnel selon l'une des revendications précédentes, **caractérisé en ce qu'**au terme de la phase de synchronisation, les énergies reçues respectivement dans lesdites fenêtres d'acquisition, au cours du balayage de réception, sont comparées entre elles et qu'une seconde pluralité (*K'*) de positions temporelles est déterminée correspondant aux énergies reçues les plus élevées, les fenêtres d'acquisition du processeur en râteau étant respectivement positionnées sur cette seconde pluralité de positions temporelles dans une phase de réception de la charge utile faisant suite à la phase de synchronisation.

**Patentansprüche**

1. Empfänger für ein UWB-Pulssignal, wobei das UWB-Pulssignal zeitlich in elementare Intervalle von vorbestimmter Dauer ($T_{PRP}$) unterteilt ist, wobei ein Symbol auf einer Mehrzahl *N* von elementaren Intervallen übertragen wird, wobei jedes elementare Intervall einen elementaren Puls umfasst, wobei das UWB-Signal eine Synchronisationspräambel umfasst, auf die eine Nutzlast folgt, wobei die Synchronisationspräambel eine Sequenz von *M* identischen Symbolen umfasst;

wobei der Empfänger eine RF-Stufe (501) umfasst, auf die eine Basisbandverarbeitungsstufe (502) folgt, wobei die RF-Stufe dazu ausgelegt ist, das Signal zu verstärken und eine Umsetzung des derart verstärkten Signals ins Basisband zu bewirken, **dadurch gekennzeichnet, dass** der Empfänger das UWB-Signal während eines Empfangsfensters mit einer Dauer empfängt, die gleich der Symboldauer ist, unterteilt in $N$ Empfangsintervalle, und die Basisbandverarbeitungsstufe umfasst:

einen Rake-Prozessor (550, 650), umfassend eine Mehrzahl $K$ von Zeitfingern ($551_1,...,551_K$), wobei jeder Zeitfinger dazu ausgelegt ist, eine Verarbeitung auf einem dem Finger zugeordneten Erfassungsfenster durchzuführen, wobei jedes Empfangsintervall $K$ Erfassungsfenster umfasst;

ein Erfassungsmodul (590, 690) zum Abschätzen wenigstens eines empfangenen Symbols ausgehend von den durch die Finger gelieferten Verarbeitungsergebnissen;

ein Steuermodul (580, 680), das dazu ausgelegt ist, die jeweiligen Positionen der Erfassungsfenster innerhalb eines Empfangsintervalls derart zu steuern, dass dieses Intervall im Verlauf einer Synchronisationsphase abgetastet wird, wobei die RF-Stufe im Verlauf dieser Phase nur während der Mehrzahl von Erfassungsfenstern funktioniert.

2. Empfänger für ein UWB-Pulssignal nach Anspruch 1, **dadurch gekennzeichnet, dass** die Verarbeitung eine Integration ist, wobei jeder Zeitfinger das Signal im Basisband in dem Erfassungsfenster integriert, das diesem Finger zugeordnet ist.

3. Empfänger für ein UWB-Pulssignal nach Anspruch 2, **dadurch gekennzeichnet, dass** das Steuermodul (560, 660) die Zeitfenster derart steuert, dass sie um einen vorbestimmten Zeitschritt von einem Empfangsintervall zum nächsten gleiten.

4. Empfänger für ein UWB-Pulssignal nach Anspruch 2 oder 3, **dadurch gekennzeichnet, dass** die RF-Stufe einen rauscharmen Verstärker umfasst, auf den eine erste Quadraturmischstufe folgt, die einen In-Phase-Weg und einen Quadratur-Weg liefert.

5. Empfänger für ein UWB-Pulssignal nach Anspruch 4, **dadurch gekennzeichnet, dass** die RF-Stufe ein Paar von Tiefpassfiltern oder Bandpassfiltern mit steuerbaren Abschneidefrequenzen umfasst, wobei das Paar von Filtern den In-Phase-Weg beziehungsweise den Quadratur-Weg filtert.

6. Empfänger für ein UWB-Pulssignal nach Anspruch 4 oder 5, **dadurch gekennzeichnet, dass** die RF-Stufe eine zweite Mischstufe umfasst, die den In-Phase-Weg ins Basisband umsetzt, um ein erstes und ein zweites orthogonales Signal zu liefern, sowie den Quadratur-Weg, um ein drittes und ein viertes orthogonales Signal zu liefern.

7. Empfänger für ein UWB-Pulssignal nach Anspruch 4 oder 5, **dadurch gekennzeichnet, dass** die RF-Stufe eine zweite Mischstufe umfasst, die den In-Phase-Weg auf eine Orthogonalbasis von Referenzsignalen projiziert, um ein erstes und ein zweites orthogonales Signal zu liefern, und den Quadratur-Weg auf die gleiche Basis projiziert, um ein drittes und ein viertes orthogonales Signal zu liefern.

8. Empfänger für ein UWB-Pulssignal nach Anspruch 6 oder 7, **dadurch gekennzeichnet, dass** jeder Zeitfinger einen ersten, einen zweiten, einen dritten und einen vierten Integrator umfasst, um das erste, das zweite, das dritte beziehungsweise das vierte orthogonale Signal über das Erfassungsfenster zu integrieren, das dem Finger zugeordnet ist, wobei die Integrationsergebnisse dieser Integratoren an das Erfassungsmodul geliefert werde.

9. Empfänger für ein UWB-Pulssignal nach Anspruch 8, **dadurch gekennzeichnet**, das die Integrationsergebnisse des ersten, des zweiten, des dritten und des vierten Integrators in einem ersten, einem zweiten, einem dritten beziehungsweise einem vierten Analog/Digital-Wandler digitalisiert werden, bevor sie an das Erfassungsmodul geliefert werden.

10. Empfänger für ein UWB-Pulssignal nach einem der vorhergehenden Ansprüche, **dadurch gekennzeichnet, dass** die Versorgung der RF-Stufe außerhalb der Mehrzahl von Erfassungsfenstern unterbrochen ist.

11. Empfänger für ein UWB-Pulssignal nach einem der vorhergehenden Ansprüche, **dadurch gekennzeichnet, dass** am Ende der Synchronisationsphase die Energien, die jeweils in den Erfassungsfenstern im Verlauf der Empfangsabtastung empfangen werden, miteinander verglichen werden, und dass eine zweite Mehrzahl $K'$ von Zeitpositionen entsprechend den höchsten empfangenen Energien bestimmt wird, wobei die Erfassungsfenster des Rake-Prozessors jeweils auf dieser zweiten Mehrzahl von Zeitpositionen in einer Phase des Empfangs der Nutzlast positioniert sind, die auf die Synchronisationsphase folgt.

**Claims**

1. A UWB impulse signal receiver, said UWB signal being time-divided into unit intervals of a predetermined duration ($T_{PRP}$), a symbol being transmitted over a plurality $N$ of unit intervals, each unit interval comprising a unit impulse, the UWB signal comprising a synchronization preamble followed by a payload, the synchronization preamble comprising a sequence of $M$ identical symbols;

said receiver comprising an RF stage (501) followed by a baseband processing stage (502), the RF stage being adapted to amplify said signal and to carry out a translation into baseband of the thus amplified signal, **characterized in that** he receiver receives said UWB signal during a receiving window having a duration equal to the symbol duration, divided into $N$ receiving intervals and

that the baseband processing stage comprises:

a rake processor (550, 650) comprising a plurality $K$ of time fingers ($551_1$, ..., $551_K$), each time finger being adapted to carry out a processing an acquisition window associated with said finger, each receiving interval comprising $K$ acquisition windows;

a detection module (590, 690) to estimate at least one received symbol from the processing results supplied by said fingers;

a control module (580, 680) adapted to control the respective positions of the acquisition windows within a reception interval, so as to scan this interval in the course of a synchronization phase, said RF stage only operating, in the course of this phase, during said plurality of acquisition windows.

2. The UWB impulse signal receiver according to claim 1, **characterized in that** said processing is an integration, each time finger integrating the baseband signal in the acquisition window associated with this finger.

3. The UWB impulse signal receiver according to claim 2, **characterized in that** the control module (560, 660) drives the time windows so that they drift by a predetermined time pitch from one reception interval to the following one.

4. The UWB impulse signal receiver according to claim 2 or 3, **characterized in that** the RF stage comprises a low noise amplifier followed by a first quadrature mixing stage supplying an in-phase channel and a quadrature channel.

5. The UWB impulse signal receiver according to claim 4, **characterized in that** the RF stage comprises a pair of low pass or band-pass filters of controllable cut-off frequencies, said pair of filters respectively filtering the in-phase channel and the quadrature channel.

6. The UWB impulse signal receiver according to claim 4 or 5, **characterized in that** the RF stage comprises a second mixing stage translating into baseband the in-phase channel to supply first and second orthogonal signals and the quadrature channel to supply third and fourth orthogonal signals.

7. The UWB impulse signal receiver according to claim 4 or 5, **characterized in that** the RF stage comprises a second mixing stage projecting the in-phase channel on an orthogonal base of reference signals, to supply first and second orthogonal signals, and projecting the quadrature channel on the same base, to supply third and fourth orthogonal signals.

8. The UWB impulse signal receiver according to claim 6 or 7, **characterized in that** each time finger comprises first, second, third and fourth integrators to respectively integrate the first, second, third and fourth orthogonal signals on the acquisition window associated with said finger, the integration results from these integrators being supplied to the detection module.

9. The UWB impulse signal receiver according to claim 8, **characterized in that** the integration results from the first, second, third and fourth integrators are digitized in first, second, third and fourth analogue/digital converters before being supplied to the detection module.

10. The UWB impulse signal receiver according to one of the preceding claims, **characterized in that** the powering of the RF stage is cut-off outside said plurality of acquisition windows.

11. The UWB impulse signal receiver according to one of the preceding claims, **characterized in that** at the end of the synchronization phase, the energies respectively received in said acquisition windows, in the course of the receiving scanning, are compared to each other and that a second plurality ($K'$) of time positions is determined corresponding to the highest received energies, the acquisition windows of the rake processor being respectively positioned on this second plurality of time positions in a payload reception phase following the synchronization phase.

Masques spectraux UWB en bande basse (en dessous de 6 Ghz)

15,4a Ch.#1
15,4a Ch.#2
15,4a Ch.#3
15,4a Ch.#4
EU LDC
FCC

Frequence (MHz)

Densité spectrale de puissance (dBm/MHz)

FIG. 1

EP 3 039 792 B1

FIG. 2A

$T_{chip}$

$T_{PRP}$

FIG. 2B

FIG. 3

Préambule de synchronisation

M symboles

Charge utile

FIG. 4

FIG. 5

FIG. 6

synch. symbol

$T_{chip}$

$T_{PRP}$

durée symbole $N.T_{PRP}$

Répétition M fois

$N_{PRP}$     $NT_{PRP}$     $NT_{PRP}$

durée préambule $M.N.T_{PRP}$

FIG. 7

EP 3 039 792 B1

synch. symbol          synch. symbol          synch. symbol

$T_{PRP}$

810          820

$W_1 - W_4$     $W_5 - W_8$     $W_9 - W_{12}$     $W_{13} - W_{16}$

$NT_{PRP}$

# FIG. 8

FIG. 9A

FIG. 9B

FIG. 9C

FIG. 9D

$W_1$  $W_2$  $W_3$  $W_4$

$T_{PRP}$

EP 3 039 792 B1

19

FIG. 10

EP 3 039 792 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1259861

**Littérature non-brevet citée dans la description**

- **M.G. KHAN INTITULÉE.** On coherent and non-coherent receiver structures for impulse radio UWB systems. Blekinge Institute of Technology, 2009
- **D.D. WENTZLOFF et al.** Energy efficient pulsed UWB CMOS circuits and systems. *Proc. of ICUWB Conference,* 2007
- **G. MASSON et al.** A 1nJ/b 3.2 to 4.7 GHz UWB 50 Mpulses/s double quadrature receiver for communication and localization. *Proc. of the ESSCIRC 2010,* 14 Septembre 2010
- **X. WANG et al.** A high-band IR-UWB chipset for real-time duty-cycled communication and localization systems. *Proc. of IEEE Asian solid-sate circuits conference,* Novembre 2011, 381-384
- **I. DOLTIĆ et al.** Low complexity chirp pulsed ultra-wideband system with near-optimum multipath performance. *IEEE Trans. on Wireless Comm.,* Janvier 2011, vol. 10 (1), 208-218
- **S. KWON et al.** A joint timing synchronization, channel estimation and SFD detection for IR-UWB systems. *Journal of Comm. and Networks,* Octobre 2012, vol. 14 (5), 501-509
- **D. MORCHE et al.** Double quadrature UWB receiver for wide-range localization applications with sub-cm ranging precision. *IEEE Journal of Solid State Circuits,* Octobre 2013, vol. 4 (10), 2351
- **BARRAS D. et al.** A low power baseband ASIC for an energy-collection IR-UWB receiver. *IEEE Journal of solid-state circuits, USA,* 01 Juin 2009, vol. 44 (6
- **B. NAUTA.** A CMOS transconductance-C filter technique for very high frequencies. *IEEE Journal of Solid State Circuits,* Février 1992, vol. 27 (2